Europäisches Patentamt

European Patent Office

Office européen des brevets

(11) Publication number: **0 129 766**
**B1**

# EUROPEAN PATENT SPECIFICATION

(45) Date of publication of patent specification: **27.12.89**

(51) Int. Cl.⁴: **G 01 N 29/02**

(21) Application number: **84106668.1**

(22) Date of filing: **12.06.84**

(54) **A method of, and apparatus for, measuring electro-kinetic properties of charged particles dispersed in a liquid medium.**

(30) Priority: **23.06.83 US 507111**

(43) Date of publication of application:
**02.01.85 Bulletin 85/01**

(45) Publication of the grant of the patent:
**27.12.89 Bulletin 89/52**

(84) Designated Contracting States:
**CH DE FR GB IT LI SE**

(56) References cited:
**EP-A-0 044 596**
**GB-A-1 332 933**
**US-A-3 710 615**
**US-A-4 015 464**

**JOURNAL OF THE ACOUSTICAL SOCIETY OF AMERICA, vol. 64, no. 1, July 1978, pages 240-242, Acoustical Society of America, US; F. BORSAY et al.: "Generation of ultrasound at metal-electrolyte interfaces"**

(73) Proprietor: **Matec Instruments, Inc.**
**75 South Street**
**Hopkinton, Massachusetts 01748 (US)**

(72) Inventor: **Oja, Tonis**
**2 Oakwood Place**
**Scarsdale New York 01583 (US)**
Inventor: **Petersen, Gary L.**
**610 Tower Hill Road**
**No.Kingstown Rhode Island 02582 (US)**
Inventor: **Cannon, David W.**
**212 Commomwealth Avenue**
**Attleboro Falls Massachusetts 02763 (US)**

(74) Representative: **Jack, Bruce James et al**
**FORRESTER & BOEHMERT Widenmayerstrasse 4/I**
**D-8000 Munchen 22 (DE)**

(56) References cited:
**PHYSICAL REVIEW A, vol. 7, no. 4, April 1973, pages 1224-1229, US; H.F. DYLLA et al.: "Neutrality of molecules by a new method"**

Courier Press, Leamington Spa, England.

## Description

This invention relates to the measurement of the electrokinetic properties of charged particles dispersed in a liquid medium.

It is known that fine particles, liquid droplets and bubbles acquire a surface electrical charge when suspended in a liquid. The magnitude of the acquired charge depends upon the type of suspended particles and its electrolytic environment. Electroneutrality, is established by the absorption and attraction of counter ions or polar molecules to the particle surface. Some of the counter charge ions or molecules are held rigidly at the particle surface and the remainder form a more diffuse layer extending into the bulk of the carrier liquid. The counter charge in the diffuse layer is not held rigidly near the surface of the particle and can be sheared away from the particle, for example, under the action of mechanical forces or of forces due to an applied electric field.

The state of electric charge of a dispersion of particles or liquid droplets has a strong influence on a number of important properties of the dispersion. The electrical potential distribution developed from the particle surface to the bulk of liquid due to the charged layers determines the interaction energy of the particles in suspension and controls the flocculation rate or tendency for particles to join and form aggregates. In addition, the potential distribution strongly influences the flow behaviour of colloidal dispersions. For these reasons the measurement and control of the state of charge in particle dispersions is of great practical concern to a number of industries, such as the paper, pigments, minerals, fiber, inks, petrochemical and pharmaceutical industries.

The electrical potential near the surface of the particles relative to the bulk liquid is commonly determined by the measurement of an electrokinetic property of the dispersion. Electrokinetic properties generally refer to an effect produced when there is relative tangential motion between the particles and their surrounding charge layers. The two most common electrokinetic measurements are electrophoresis and streaming potential. Detailed descriptions of these measurements can be found in R. J. Hunter. *Zeta Potential in Colloid Science,* Chapter 4, Academic Press Inc., New York, NY (1981).

Electrophoresis measurements determine the velocity of the charged particles moving under the action of an applied DC electric field. The particle velocity or electrophoretic mobility (velocity per unit electric field) is used to calculate the electrokinetic potential at the plane of sheer between the particle and charge layers.

In streaming potential measurements, a solid porous plug of the particle material is made and the liquid is streamed through it. The mechanical shear produced by forcing the liquid through the plug causes an electric potential to be developed across the plug which can be measured with suitable electrodes. These types of measurements are obviously not well suited to emulsions where the dispersed particle phase is immiscible liquid droplets.

In both the electrophoresis measurement and the streaming potential measurement, the electrokinetic potential determined is usually termed the "Zeta Potential". Knowledge of the zeta potential of a particle dispersion allows one to characterize and ultimately to predict and control the stability to flocculation and important rheological properites of a suspension or the like. A number of chemical additives are commonly used to alter the zeta potential of a particle dispersion to achieve a desired state of flocculation or flow property. These usually consist of electrolytes, polyelectrolytes and surface active agents (substances which alter the prevailing conditions at interfaces). Precise measurements of the zeta potential offer an attractive way to determine the proper dosage of additive required to achieve a desired particle dispersion property. Unfortunately, electrophoresis and streaming potential measurements are difficult, time consuming measurements requiring a highly skilled operator to achieve reproducible results.

In addition, the measurements are not easily adapted to continuous monitoring and require extensive tedious sample preparations. The most common continuous monitoring technique used is microelectrophoresis where moving particles are observed with an optical microscope to determine the electrophoretic mobility. In these measurements, the sample must be diluted to allow observation of individual particles. Up to the present time, no practical electrokinetic measurement has been available that provides rapid, direct measurements in concentrated dispersions.

In the prior art, methods have been developed to use ultrasonic radiation to produce an electrokinetic effect in an electrolyte solution or suspension of particles. When an electrolytic solution or suspension of particles is exposed to ultrasonic waves, a voltage is produced and can be measured using two electrodes that are spaced apart by a distance corresponding to an odd multiple of half of the ultrasonic wavelength. This effect, termed the ultrasonic vibration potential, is attributed to P. Debye who, in 1933 (Journal Chemical Physics, Vol. 1, Pg 13. 1933), predicted that when sound is propagated in an ionic solution, a momentary charge separation occurs due to a relative displacement of the cations and anions in the solution. This predicted effect occurs if the cations and anions of an electrolyte have different effective masses and frictional coefficients. This momentary charge separation where one region will be charged positively with respect to an adjacent negatively charged region, implies that an instantaneous electrical signal can be measured. Thus, if inert metal probes are placed in two different regions, an alternating potential having the same frequency as the sound wave will be observed.

A similar effect arises for colloidal particles and emulsion droplets because of the distortion of the ionic surroundings by the ultrasonic waves. This effect is termed the colloidal vibration potential, and was first predicted by A. Rutgers in 1938 (Physica 5:46) and observed further by E. Yeager in 1949 (Journal Chemical Physics. Vol. 17. Pg. 411). The modern method for measuring the electrical potential in colloidal systems is given by U. Beck et al., (TAPPI. Vol. 61. Pgs 63—65) and has been related to the electo-kinetic potential or zeta potential. A further arrangement for ionic solutions is seen in Borsay et. al., (Journal of the Acoustical Society of America, Pages 240—242, Vol. 64, July 1978).

However, a number of disadvantages are associated with the colloidal vibration potential method for making practical measurements in colloidal dispersions. These include long path lengths in water tanks required between the ultrasonic transmitter and the cell containing the receiving electrode pair and liquid under study. A primary problem with the technique is that the electrical conductivity of the colloidal solution often varies tremendously over the range of zeta potentials common in these systems. This results in a changing input electrical impedance to the receiving electronics making quantitative determination of the correct potential very difficult.

It is desirable therefore, to improve upon the system used to measure the ultrasonic vibration potential or colloidal vibration potential which is ultimately used to determine the zeta potential.

In one aspect invention provides a method of measuring electro-kinetic properties of charged particles dispersed in a liquid medium, which method comprise the steps of positioning two electrodes to contact the liquid medium, energising the electrodes with an alternating electrical potential to cause a charge separation between the surfaces of the dispersed particles and the charge layers that surround the particles in the liquid medium and thereby to generate an acoustic signal, spacing an acoustic transducer from the electrodes for detecting the acoustic signal, and measuring the amplitude of the detected signal, the amplitude being a function of the electro-kinetic properties of particles present in the liquid medium, the number of these particles per unit volume, and the amplitude of the excitation potential on the electrodes.

The liquid medium may be a slurry, a solution, an emulsion or a colloid or other dispersion/suspension.

Thus, the present invention uses a new method for measuring an alternate electro-kinetic effect that can be used to determine the electro-kinetic potential or state of charge in solid particle dispersions, emulsions and the like. The method overcomes the disadvantages of the colloidal vibration potential method and provides the capability to make measurements directly in concentrated dispersions. The method can be used to monitor instantaneously the influence of chemical additives added to a dispersion to alter the state of charge on the particles.

The invention also provides apparatus for performing the method of the invention. Thus in a further aspect the invention provides an apparatus for measuring the electro-kinetic properties of charged particles dispersed in a liquid medium, which apparatus comprises a source of alternating electrical potential coupled to a pair of electrodes through circuitry for controlling the amplitude of the potential applied to the electrodes, the pair of electrodes being positionable to contact the liquid medium so that, upon energisation by the alternating electrical potential, a charge separation occurs between the surfaces of the dispersed particles and the charge layers that surround the particles, so that an acoustic wave is generated, and a receiving transducer positionable to detect the acoustic wave generated in the liquid medium and coupled through an amplifier to a phase sensitive detector for measuring the amplitude and phase of the signal output by the transducer in relation to the amplitude and phase of the alternating potential applied to the electrodes, thereby to determine the magnitude and polarity of the charge on the particles.

In one preferred arrangement a high voltage (typically 200—400 volts peak to peak) alternating potential is applied to an electrode pair immersed, for example, in a dispersion of particles or in an emulsion. Considering the dispersion, the alternating electric field developed between the electrodes produces an electro-kinetic effect in the dispersion whereby charged species surrounding the dispersed particles are displaced from their equilibrium positions around the particles due to the electric force produced by the alternating electric field. This results in an alternating pressure being developed in the vicinity of the electrode surface as the charged species are alternately displaced towards and away from the electrode surface. The alternating pressure developed corresponds to the production of an acoustic wave at the same frequency as the applied alternating potential. The amplitude of the acoustic wave developed will be proportional to the electro-kinetic potential or zeta potential of the particles and the number of particles per unit volume at constant applied voltage. An acoustic transducer placed in the path of the acoustic wave that is emitted from the electrode pair is able to detect and measure the amplitude of acoustic wave produced. The apparatus provides for maintaining a constant voltage amplitude on the electrode pair even if the electrical conductivity of the dispersion should change. This ensures that the signal measured by the acoustic transducer does not depend upon the conductivity of the liquid medium but only on the amount of charge at the surface of the particles and the number of particles per unit volume. This is one of the advantages of the invention over the prior art.

A number of electrode configurations can be used to produce the effect described above. In general, the magnitude of the effect produced is optimized by using an electrode geometry that spaces electrodes of opposite polarity in such a way that sound produced at each electrode will arrive in phase at the acoustic transducer used to detect and measure the amplitude of the acoustic wave.

In one preferred form of the invention, the alternating potential applied to the electrode is in the form of a pulse whose duration is typically 1 to 20 cycles of the alternating potential. This produces an acoustic pulse that propagates from the electrode configuration. The receiving transducer is spaced such a distance away from the electrodes that the time required for the acoustic pulse to travel the distance between the electrodes and the receiving transducer is greater than the time duration of the applied electrical pulse to the electrodes. This separates the two signals in time so that any electrical cross talk between the transmitting and receiving circuits in the apparatus during application of the high voltage pulse at the electrodes does not interfere with the acoustic signal being measured by the receiving transducer. The acoustic path that separates the receiving transducer from the electrodes may be a solid, a liquid, or the dispersion being measured. In the case of a solid path, one surface of the electrodes is coupled acoustically to a solid medium such as a glass, metal, or a plastic bar and the other surface of the electrodes is in contact with the dispersion under study. The receiving transducer is acoustically coupled to the other rod or bar such that the acoustic signal generated at the electrodes is coupled into the solid bar or rod and propagates through the solid bar with signals generated at each electrode surface arriving in phase at the receiving transducer. This configuration has a primary advantage in that the acoustic wave produced at the electrodes always propagates in a medium with constant acoustic properties, so that propagation effects will not depend upon conditions in the dispersion.

In another preferred configuration, the receiving transducer is separated from the electrodes by a quantity of the liquid medium under study. In this case, electrodes of opposite polarity are spaced odd multiples of one half of the acoustic wavelength in the dispersion. The electrode spacing is in a direction parallel with the direction of sound propagation towards the receiving transducer. Again the separation distance between the electrodes and the receiving transducer is chosen such that the propagation time of the acoustic pulse is greater than the duration of the applied electrical pulse to the electrodes.

In all configurations, the dispersion under study may be static or continuously flowing. The phase of the received acoustic signal relative to the phase of applied alternating potential will be in phase or 180 degrees out of phase depending upon the polarity of the charge at the particle surface. By measuring the amplitude and the phase of the received acoustic signal relative to some reference, both the electrokinetic potential or state of charge of the particles and the polarity of the charge on the particles may be determined. This provides another important advantage over the prior art where the sign of the charge must be inferred from changes of signals relative to known standards.

In one preferred configuration, a gated amplifier is used to generate a high voltage pulse applied to the electrodes. The gated amplifier derives the pulse from a continuous wave oscillator or frequency synthesizer which serves also as a phase reference. The signal developed at the receiving transducer is fed to a tuned receiver and amplified. The output of the tuned receiver is fed to a phase detector which uses the continuous wave reference to provide an output indicating the phase and amplitude of the received acoustic signal. The output of the phase detector can be adjusted and calibrated to a reference dispersion of known zeta potential and sign of charge. Once calibrated the apparatus can be used to monitor continuously the zeta potential and polarity of charge in unknown dispersions.

The invention can be used to make Electrokinetic Sonic Amplitude (E.S.A.) meusurements directly in colloid concentrations ranging from a few hundred parts per million to concentrations as high as 70 weight percent colloid. This is another advantage of the invention over prior art.

In order that the invention may be more readily understood, and further features thereof may be appreciated, embodiments of apparatus constructed in accordance with the invention and of a method of the invention will now be described, by way of example, with reference to the accompanying drawings, in which:

Figure 1 illustrates schematically one embodiment of an apparatus of the invention;

Figure 2 is a cross-sectional view of one form of a transmitting electrode pair/receiving piezoelectric transducer configuration;

Figure 3 is a graph illustrating the effect of using the apparatus;

Figure 4 is a cross-sectional view of another form of a transmitting electrode pair/receiving piezoelectric transducer configuration; and

Figure 5 is a graph comparing measurements derived using a method and apparatus of the invention to zeta potential measurements in a common colloid dispersion.

In developing the invention, an essentially new electrokinetic effect in colloidal dispersions and emulsions, that can be used to determine the electrokinetic potential (zeta potential) or state of charge in the dispersion and the sign of the charge in the dispersion has been discovered. This effect is produced by energizing an electrode configuration which is in contact with the particle dispersion or emulsion with an alternating potential. This results in the generation of an alternating pressure or acoustic wave at the same frequency as the applied alternating potential.

An acoustic transducer placed in the path of the generated acoustic wave is able to detect and measure the amplitude of the acoustic signal. The amplitude of the acoustic signal is proportional to the electrokinetic potential or zeta potential of the particle dispersion. The phase of the acoustic signal can also be measured and used to determine the sign of the charge on the particles.

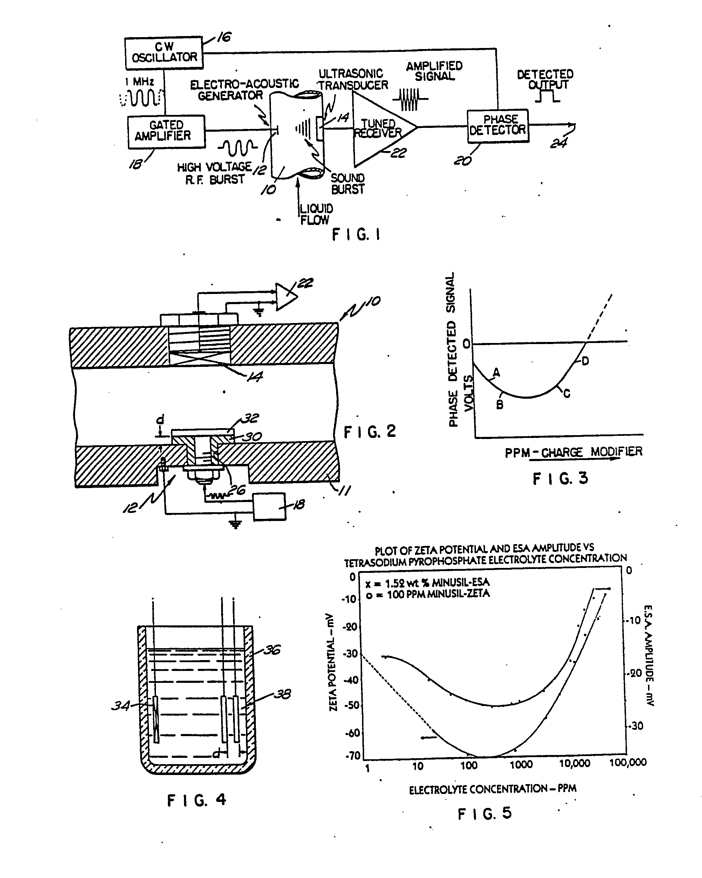

Thus, an apparatus of the invention comprises an electrode configuration adapted to be placed directly in a solution or suspension for generating an acoustic wave. The electrode configuration generates sound in a direction or directions determined to some extent by its geometry. After the fluid is energised, using the electrode configuration, the amplitude of the signal at a distance spaced from the electrode configuration is received and observed. One suitable apparatus for achieving this result, is illustrated, schematically in Figure 1. Figure 1 illustrates a section of a pipe 10 which may be considered to be in a process stream, or which could be a cylindrical container in a static or non-flowing mode. An electro-acoustic generator consisting of an electrode configuration 12 is mounted in one part of the pipe wall with the electrodes 12 in a position to contact liquid within the pipe.

A conventional acoustic transducer 14 is mounted in the pipe wall at a position substantially opposite the electrodes. A continuous wave (C.W.) oscillator 16, that may generate a frequency between 0.1 and 100 MHz feeds a gated amplifier 18 and a phase detector 20 is used to energise the system. The output of the gated amplifier 18 is effectively a burst of several cycles, generally at several hundred volts amplitude, which is fed to the electro-acoustic generator electrodes 12. Preferably, the amplitude of the electrical signal at the electro-acoustic generator electrode 12 is monitored, using any suitable technique, so that a constant amplitude electrical signal is applied to the generator electrodes regardless of the electrical conductivity of the liquid.

The output of the ultrasonic transducer 14 is fed to a tuned receiver 22 and thence to the phase or amplitude, sensitive detector 20, where essentially the RF carrier from the CW oscillator 16 is stripped and the resultant is seen at an output 24 of the detector 20. This output can be connected to any conventional monitoring device such as an oscilloscope, recorder or the like. In addition, inasmuch as the output of the oscillator 16 is fed to the phase detector 20, the phase difference of the signal generated by the oscillator 16 to that of the received signal may also be monitored.

The relative phase of the wave received at the transducer 14 depends upon the distance between the generator electrodes 12 and the transducer 14, the speed of travel of the sound wave through the liquid medium and the polarity of the net electrical charge on the particle or emulsion droplets. If a change in the phase of the electrical signal occurs, as indicated in the dotted line area of Figure 3, at a fixed colloid or emulsion droplet concentration and at a constant temperature, this must be due to a change in polarity of the charge on the particles inasmuch as the distance between the generator and the transducer always remains constant.

A successful version of an electrode pair configuration for the electroacoustical generator is shown in Figure 2. A pipe wall 11, which is of a suitable metallic material acts as one electrode of the pair. A hole indicated at 26 is drilled through the wall 11. Preferably the inner surface of the pipe in the region of the hole 26 is made flat, for example using a back spot facing tool. A circular cylindrical electrical insulator part 30, which has a stepped longitudinal outer profile is mounted in the hole 26 with the larger step portion resting on the flattened portion of the inner surface of the pipe wall 11. This larger step portion has a dimension "d" which is equal to one-half of a wave length ($\lambda/2$) or odd integral multiples of $\lambda/2$ of the sound wave to be generated. Within the cylindrical insulator part 30 is mounted a second electrode 32 and when this electrode is positive with respect to the pipe wall, electric field lines will originate here and will terminate on the pipe wall, and a corresponding sound pulse will be generated.

In essence the sound pulse will be received at the transducer 14 a certain number of microseconds after the pulse is transmitted depending upon the amount of time it takes the sound signal to traverse the pipe.

This signal will be seen at the output of the phase detector and will be either positive or negative, depending upon the charge on the particles.

There are several advantages of generating the sound with a pulsed alternating electric field as opposed to the known method of detecting sound by observing an oscillating electric field. Firstly, it is possible to maintain a constant amplitude electric field between the electrodes. This compensates for changes in conductivity of the fluid. No such compensating method is known for the inverse process. Secondly, it is relatively easy to produce a large electric field in the fluid and the process of detecting low level ultrasound is well known. Optimizing a receiving electrode assembly for use in a fluid with widely changing electrical characteristics is much more difficult, if not impossible.

The electro-acoustical generator 12 which causes the charge displacement in the liquid, can have a number of configurations, but it must be realized that in order to energize the ions of the solution properly, the spacing (length d in drawings) between the pair of electrodes should be effectively one-half wave length or an odd integral multiple of half wave lengths for the frequency of the supplied energy.

An example of how the invention may be used in a laboratory situation will now be given. In many instances, it is desired to know how much dispersant chemical, such as a quaternary amine, is required to be incorporated into a given slurry, such as of $CaCO_3$, in order to stabilize the slurry against flocculation and settling. To assess this a quantity of slurry to be studied is placed into a test chamber 36 in the form of a vessel (see Figure 4). The vessel is fitted with a electrode pair 38 which may be energized as discussed above. A conventional receiver transducer 34 is spaced from the electrode pair. An initial output signal 24 (see Figure 1) is obtained from the slurry. For maximum slurry stability the output signal should be made as large as possible. This requirement means that for a given particle concentration each particle has the maximum possible electrical charge placed on it. Now, if the addition of small quantities, typically in the order of parts per million, of dispersant chemicals results in an increase in signal amplitude, as for example in the region indicated from A to B in Figure 3, the slurry can be further stabilized by additional doses of the chemical. If on the other hand the addition of small quantity of the dispersant decreases the signal size, as for example from C to D in Figure 3, implying a decrease in slurry particle charge, this may indicate to the experimenter that the wrong type of chemical is being used or that sufficient amounts of the right kind of chemical have already been used. Quantitative results in terms of parts per million dispersant at a given slurry concentration for optimal dispersal can be obtained. It is clear that similar results can be obtained with this device in an on-line, flow-through configuration, as shown in Figure 2, the only difference being that chemical additions are made at some point upstream of the measurement zone, and adequate time, determined by flow rate, must be given for proper mixing a reacting.

In many other instances apparatus of the invention may be used to determine when, for a given slurry concentration, the output signal 24 is at a minimum, preferably zero. For example, the apparatus may be used for on-line monitoring in waste-water treatment and pulp and paper plants, where the intent is to make, by the appropriate addition of chemical agents, the charges on individual slurry particles as small as possible so that they will naturally stick together. In this condition, only attractive van der Waals forces will be operative. This stage is achieved by addition of suitable chemicals called flocculants. Apparatus of the invention may be used in studies to determine, from a large class of possible available flocculants, that chemical which will be most economically efficient to use. Similar results may be achieved with emulsions.

In the above discussions, the additon of suitable chemicals such as flocculants and dispersants to a fluid, in order to achieve an optimum result or a particular result has been discussed. These chemicals in essence are charge modifiers since the net electrical charge of the particles or droplets in the liquid is changed or modified as the case might be by creating a charge displacement in the solution and monitoring corresponding changes in the charge of the particle or droplet.

Figure 5 is a graph illustrating how the effect produced and measured using the method and apparatus of the invention is related to the well known electrokinetic potential, the zeta potential. The effect that is produced and measured in the present invention is termed the "Electrokinetic Sonic Amplitude" and may be abbreviated to E.S.A. Values of E.S.A. are usually expressed as the amplitude of the acoustic signal measured by the receiving transducer when a constant alternating potential is applied to the electrode assembly. Figure 5 is a comparison of E.S.A. measurements to zeta potential measurements made on the same colloid dispersion as a function of a chemical additive or dispersant that is known to change the zeta potential of the dispersed particles. Measurements were made in a dispersion of colloidal silica and the values plotted as a function of the concentration of a common dispersant, sodium pyrophosphate. The left hand vertical axis gives zeta potential values in millivolts and the right hand vertical axis gives E.S.A. values in volts which correspond to the amplified voltage developed at the receiving acoustic transducer. These results show that there is a direct correspondence between zeta potential and E.S.A. Zeta potential measurements were determined using the microelectrophoresis technique at a colloid concentration for 100 parts per million.

## Claims

1. A method of measuring electro-kinetic properties of charged particles dispersed in a liquid medium, which method comprises the steps of positioning two electrodes to contact the liquid medium, energising the electrodes with an alternating electrical potential to cause a charge separation between the surfaces of the dispersed particles and the charge layers that surround the particles in the liquid medium and thereby to generate an acoustic signal, spacing an acoustic transducer from the electrodes for detecting the acoustic signal, and measuring the amplitude of the detected signal, the amplitude being a function of the electro-kinetic properties of the particles present in the liquid medium, the number of these particles per unit volume, and the amplitude of the excitation potential on the electrodes.

2. A method according to claim 1, including positioning the electrodes in a section of a conduit through which the dispersion flows.

3. A method according to claim 1 or 2, including the further step of controlling the amplitude of the energizing alternating potential.

4. A method according to claim 1, 2 or 3, comprising the further step of comparing the phase of the detected signal with the phase of the applied electrical potential in order to determine the polarity of the charge on the particles.

5. A method according to any one of claims 1 to 4, wherein the dispersion comprises a slurry, a solution, an emulsion or a suspension.

6. A method according to any one of claims 1 to 5, further comprising the step of adding a small quantity of a charge modifying chemical to the liquid medium and again measuring the amplitude of the detected signal to assess the effect of the addition.

7. An apparatus of measuring the electro-kinetic properties of charged particles dispersed in a liquid medium, which apparatus comprises a source of alternating electrical potential coupled to a pair of electrodes, the pair of electrodes being positionable to contact the liquid medium so that, upon energisation by the alternating electrical potential, a charge separation occurs between the surfaces of the dispersed particles and the charge layers that surround the particles, so that an acoustic wave is generated, and a receiving transducer positionable to detect the acoustic wave generated in the liquid medium and coupled through an amplifier to a phase sensitive detector for measuring the amplitude and phase of the signal output by the transducer in relation to the amplitude and phase of the alternating potential applied to the electrodes, thereby to determine the magnitude and polarity of the charge on the particles.

8. An apparatus according to claim 7, wherein said circuitry controlling the amplitude of the potential applied to the electrodes comprises a gated amplifier.

**Patentansprüche**

1. Verfahren zum Messen der elektro-kinetischen Eigenschaften von in einem flüssigen Medium verteilten geladenen Partikeln, durch Positionieren von zwei Elektroden in Berührung mit dem flüssigen Medium, Beaufschlagen der Elektroden mit einem alternierenden elektrischen Potential zur Verursachung einer Ladungstrennung zwischen den Oberflächen der verteilten Partikeln und den Ladungsschichten, die die Partikeln in dem flüssigen Medium umgeben und so ein akustisches Signal zu erzeugen, Anordnen eines akustischen Wandlers mit Abstand von den Elektroden zum Aufnehmen des akustischen Signals und Messen der Amplitude des aufgenommenen Signals, wobei die Amplitude eine Funktion der elektrokinetischen Eigenschaften der Partikeln in dem flüssigen Medium ist, die Anzahl dieser Partikeln pro Volumeneinheit und die Amplitude des Erregungspotentials an den Elektroden ist.

2. Verfahren nach Anspruch 1, unter Positionieren der Elektroden in einem Abschnitt einer Leitung, durch die die Dispersion fließt.

3. Verfahren nach Anspruch 1 oder 2, weiter unter Steueren der Amplitude des Wechselpotentials.

4. Verfahren nach Anspruch 1, 2 oder 3, weiter unter Vergleichen der Phase des aufgenommenen Signals mit der Phase des aufgebrachten elektrischen Potentials, um die Polarität der Ladung an den Partikeln zu bestimmen.

5. Verfahren nach einem der Ansprüche 1 bis 4, wobei die Dispersion einen Schlamm, eine Lösung, eine Emulsion oder eine Suspension aufweist.

6. Verfahren nach einem der Ansprüche 1 bis 5, weiter unter Zufügen einer kleinen Menge einer die Ladung ändernden Chemikalie zu dem flüssigen Medium und erneutem Messen der Amplitude des aufgenommenen Signals zum Bewerten der Wirkung dieser Zugabe.

7. Vorrichtung zum Messen der elektro-kinetischen Eigenschaften von in einem flüssigen Medium verteilten geladenen Partikeln, mit einer Quelle für ein wechselndes elektrisches Potential, die mit einem Paar von Elektroden verbunden ist, wobei das Paar von Elektroden derart mit dem flüssigen Medium in Berührung gebracht werden kann, daß bei Beaufschlagen der Elektroden durch das wechselnde elektrische Potential zwischen den Oberflächen der Verteilten Partikeln und den Ladungsschichten, die die Partikeln umgeben, eine ladungstrennung auftritt, so daß eine akustische Welle erzeugt wird, und mit einem Aufnahmewandler, der zum Aufnehmen der in dem flüssigen Medium erzeugten elektrischen Welle positioniert werden kann und über einen Verstärker mit einem Phasenempfindlichen Detektor gekoppelt ist zum Messen der Amplitude und der Phase des Signalausgangs des Wandlers in Relation zu der Amplitude und der Phase des an die Elektroden angelegten wechselnden Potentials, um die Größe und die Polarität der Ladung auf den Partikeln zu bestimmen.

8. Vorrichtung nach Anspruch 7, wobei der die Amplitude des an die Elektroden angelegten Potentials einen gegateten Verstärker aufweist.

**Revendications**

1. Un procédé pour mesurer les propriétés électrocinétigques de particules chargées dispersées dans un milieu liquide, ledit procédé comportant les étapes suivantes: positionner deux électrodes pour entrer en contact avec le milieu liquide, soumettre les électrodes à un potentiel électrique alternatif pour provoquer une séparation de charge entre les surfaces des particules dispersées et les couches de charge qui entourent les particules dans un milieu liquide, produire de cette façon un signal acoustique, positionner un transducteur acoustique à une distance des électrodes pour détecter le signal acoustique, et mesurer l'amplitude du signal détecté, l'amplitude étant une fonction des propriétés électrocinétiques des particules présentes dans le milieu liquide, du nombre de ces particules par unité de volume et de l'amplitude du potentiel d'excitation sur les électrodes.

2. Un procédé selon la revendication 1, consistant à positionner les électrodes dans une section d'un conduit à travers lequel s'écoule la dispersion.

3. Un procédé selon la revendication 1 ou 2, comportant l'étape ultérieure de contrôle de l'amplitude du potentiel alternatif d'alimentation.

4. Un procédé selon la revendication 1, 2 ou 3, comportant l'étape ultérieure de comparaison de la phase du signal détecté avec la phase du potential électrique appliqué en vue de déterminer la polarité de la charge sur les particules.

5. Un procédé selon une quelconque des revendications 1 à 4, dans lequel la dispersion consiste en une boue, une solution, un émulsion ou une suspension.

6. Un procédé selon une quelconque des revendications 1 à 5, comportant l'étape ultérieure qui consiste à ajouter une petite quantité d'un produit chimique qui modifie la charge, en milieu liquide, et à mesurer à nouveau l'amplitude du signal détecté pour apprécier l'effet de l'addition.

7. Un appareil pour mesurer les propriétés électrocinétiques de particules chargées dispersées dans un milieu liquide, lequel appareil comporte une source de potentiel électrique alternatif couplée à une paire d'électrodes, la paire d'électrodes pouvant être positionnee pour entrer en contact avec le milieu liquide, de sorte que dès qu'on établit un potentiel électrique alternatif, il se produit une séparation de charge entre les surfaces des particules dispersées et les couches de charge qui entourent les particules, de sorte qu'une onde acoustique est produite, et dans lequel un transducteur récepteur peut être positionné pour détecter l'onde acoustique produite dans le milieu liquide et être couplé par l'intermédiaire d'un amplificateur à un détecteur sensible à la phase pour mesurer l'amplitude et la phase du signal de sortie du transducteur par rapport à l'amplitude et la phase du potentiel alternatif appliqué aux électrodes, en vue de dèterminer de la sorte la gradeur et la polarité de la charge sur les particules.

8. Un appareil selon la revendication 7, dans lequel lesdits circuits contrôlant l'amplitude du potentiel appliqué aux électrodes, comportent un amplificateur à porte.

F I G. I

F I G. 2

F I G. 3

F I G. 4

PLOT OF ZETA POTENTIAL AND ESA AMPLITUDE VS TETRASODIUM PYROPHOSPHATE ELECTROLYTE CONCENTRATION
F I G. 5